Europäisches Patentamt

European Patent Office

Office européen des brevets

(11) Publication number: **0 211 788**
**A1**

(12) # EUROPEAN PATENT APPLICATION

(21) Application number: **86440067.6**

(22) Date of filing: **13.08.86**

(51) Int. Cl.⁴: **A 61 C 11/00**

(30) Priority: **14.08.85 ZA 856163**

(43) Date of publication of application:
**25.02.87 Bulletin 87/9**

(84) Designated Contracting States:
**DE FR GB IT**

(71) Applicant: **Enslin, John William**
**19 Warbler Street Cotswold Extention**
**Port Elizabeth Cape Province(ZA)**

(71) Applicant: **Demay, Jean-René**
**14 Louis Botha Street**
**Uitenhage Cape Province(ZA)**

(72) Inventor: **Enslin, John William**
**19, Warbler Street Cotswold Extension**
**Port Elisabeth Cape Province(ZA)**

(74) Representative: **Nuss, Pierre**
**10, rue Jacques Kablé**
**F-67000 Strasbourg(FR)**

(54) **Dental articulator.**

(57) The invention provides an articulator (10) for use in dental technology and an accessory (36) for such an articulator. The articulator has a pair of brackets (16, 18) for supporting jaw casts (38, 40) in opposed relationship and which are connected together and movable relative to each other to permit alignment relative to each other of jaw casts supported thereby. A pair of disposable jaw cast holders (42, 44), forming said accessories, are detachably attached to the brackets for mounting the jaw casts on the brackets. Each accessory or holder comprises a swivel joint (36) about which a jaw cast mounted on the holder can be manipulated.

FIG I

EP 0 211 788 A1

ENSLIN John William, 19 Warbler Street, Cotswold Extension, PORT ELIZABETH, Cape Province (Republic of South Africa)

DEMAY Jean-René, 14 Louis Botha Street, UITENHAGE, Cape Province (Republic of South Africa)

Dental articulator

THIS INVENTION relates to a dental articulator for use in dental technology, and to an accessory for such articulator.

According to the invention there is provided a dental articulator for use in dental technology and which comprises

a pair of brackets for supporting jaw casts in opposed relationship, the brackets being connected together and movable relative to each other to permit alignment relative to each other of jaw casts supported thereby ; and

a pair of disposable jaw cast holders detachably attached respectively to the brackets for mounting said jaw casts on the brackets, at least one of the holders comprising a swivel joint about which a jaw cast mounted on said holder can be manipulated.

The holders may substantially identical, being interchangeably attached to the brackets, each holder comprising a pair of portions engageable with each other via a pair of complementary part-spherical abutment surfaces, namely a concave surface and a convex surface. One portion of each holder may be a cast portion having a flat surface facing away from its part-spherical surface for adhesive attachment to a jaw cast, the other portion being a bracket portion having attachment means for spigot/socket attachment to the associated bracket.

Each cast portion may have the concave part-spherical abutment surface, each bracket portion having the convex part-spherical abutment surface, and each bracket portion having its attachment means in the form of a socket which receives and frictionaly engages a spigot on the associated bracket. The interior of the socket of each bracket portion may be non-circular in cross-sectional outline, the spigot on the associated bracket having a complementary non-circular cross-section to prevent rotation of the bracket portion around the spigot.

Each concave abutment surface may be capable of projection on to a single hemisphere having the same radius of curvature. By this is meant that there are no zones on the concave abutment surface arranged in a fashion such as to be able to grip therebetween a ball having the same radius of curvature as the abutment surface. In other words, the convex abutment surface is freely movable into and out of contact with the concave abutment surface.

Each portion of each jaw cast holder may be in the form of a moulding of synthetic plastics material.

In a particular embodiment of the invention the brackets are respectively provided by a pair of limbs projecting laterally from an upstanding post, namely a lower limb projecting at a low level from the post and an upper limb spaced above the lower limb and in alignment therewith in plan view, the upper limb being articulated to the post about a horizontal pivot axis expending transversely to said post and transversely to said upper limb.

Further according to the invention there is provided an accessory for a dental articulator which comprises a pair of portions engageable with each other via a pair of complementary part-spherical abutment surfaces providing a swivel joint, namely a concave surface and a convex surface, one of the portions being a cast portion having a flat surface facing away from its part-spherical surface for adhesive attachment to a jaw cast, and the other portion being a bracket portion having attachment means for spigot/socket attachment to a bracket on an articulator, the concave abutment surface being capable of projection on to a single hemisphere having the same radius of curvature.

Each of the portions may be in the form of a moulding of synthetic plastics material, the cast portion having the concave part-spherical abutment surface and the bracket portion having the convex part-spherical abutment surface, and the bracket portion having its attachment means in the form of a socket for frictionally engaging a spigot on a bracket on an articulator, the interior of the socket being non-circular in cross-sectional outline.

In the embodiment of the articulator described above where the brackets are provided by a pair of limbs connected to an upstanding post, the lower limb will typically be rigidly connected to the post, so that the bracket constituted by the upper limb is connected via the post to the bracket constituted by the lower limb, and so that the brackets are movable relative to each other to permit alignment relative to each other of jaw casts supported thereby, by the articulation between the upper limb and the post.

The swivel joint of each holder is preferably lockable. In this regard it will be apprciated that the complementary part-spherical abutment surfaces whereby the portions of each holder are engageable with each other in fact provide a lockable swivel joint. Swivelling of the portions takes place by sliding of one part-spherical abutment surface against the associated part-spherical abutment surface, and the swivel joint, which is in fact a ball-and- socket joint, is lockable by adhesive applied to said part-spherical abutment surfaces, when they engage each other.

It will further be appreciated that, as the holders are disposable, they are suitable for and intended for permanent attachment to jaw casts. This can be effected, as mentioned above, by adhesively attaching a cast portion of each holder via a flat surface thereon to a preferably flat surface on the associated jaw cast.

When the swivel joints comprises a pair of complementary part-spherical abutment surfaces and in fact constitute a ball-and-socket joint, one of the portions of the holder can be regarded as a ball portion, and the other as a socket portion. In the embodiment of the invention described above in which the bracket portion has the convex part-spherical surface and the jaw portion has the concave part-speherical surface, the bracket portion is accordingly the ball portion and the jaw portion is the socket portion of the joint.

In the particular embodiment where each ball- or bracket portion has a socket for attachment to a spigot on the associated bracket, the ball portion may be of thimble- or cup shape, its interior acting as the socket which is receivable frictionally and releasably on a spigot, typically in the form of a boss or protrusion, provided therefor on the associated bracket, the exterior surface of the floor of the cup providing the part-spherical surface or ball of the joint; and the jaw- or socket portion of the holder may be provided by a part-spherical depression or recess on a flat base. Naturally, although not preferred, the bracket portion may have the socket of the ball and socket joint, ie the concave part-spherical surface, and the jaw portion may have the ball of the ball and socket joint, ie the convex part-spherical surface.

The invention accordingly permits a method of setting up a pair of dental jaw casts on an articulator to provide said jaw casts with the desired or prescribed bite, using the articulator described above, which method comprises mounting the jaw casts on the jaw holders on the limbs or brackets of the articulator, manipulating the or each swivel joint and the upper limbs or brackets of the articulator relative to each other, until the jaw casts present the appropriate bite, after which the or each swivel joint is locked, eg by adhesive as described above.

When both swivel joints are ball and socket joints as described above, with the socket portions forming jaw portions for attachment to jaw casts as described above, the sockets of the ball or bracket portions may first be pressed on to their spigots or bosses on the limbs or brackets of the articulator, after which one of the jaw casts, conveniently the lower jaw cast, will have the associated socket or jaw portion adhesively attached thereto at a suitable position on a flat surface provided for this purpose on the side of the cast remote from the teeth/gums of the cast. The brackets of the articulator and the jaw casts can then be manipulated, with the socket portions of the swivel joints engaging the ball portions thereof and the other jaw (typically the upper jaw which will have a similar flat surface) on the upper limb and abutting the socket portion of its associated swivel joint. When a suitable bite has been achieved, said other jaw is then attached to the associated socket portion by adhesive, and both ball and socket joints are locked in position by adhesive, in any convenient sequence.

The jaw casts, with the locked holders attached thereto, may then be removed from the brackets for use later, on the same articulator or elsewhere on a substantially identical articulator, thereby freeing the articulator on which the bite was set up for further use.

The invention will now be described, by way of example, with reference to the accompanying diagrammatic drawings, in which:

Figure 1 shows a three dimensional view of an articulator in accordance with the present invention;

Figures 2A, 2B and 2C show respectively a three dimensional view, a plan view and a sectional side elevation (along line II C-II C in Figure 2B) of the socket portion of an accessory in the form of a jaw cast holder for the articulator of Figure 1;

Figures 3A, 3B and 3C show respectively a three dimensional view, a plan view and a sectional side elevation (in the direction of line III C - III C in Figure 3B) of the ball portion of an accessory in the form of a jaw cast holder for the articulator of Figure 1;

Figure 4 shows a detail of a three dimensional view of a modified form of spigot or boss for the articulator of Figure 1; and

Figure 5 shows a sectional side elevation of the detail of Figure 4.

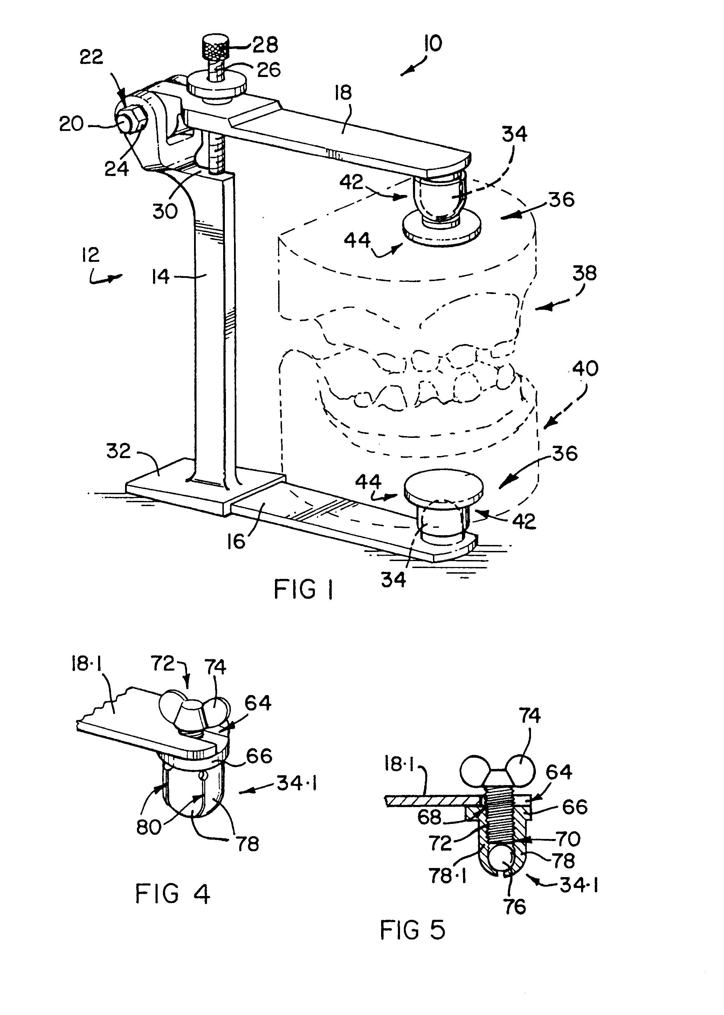

Referring first to Figure 1 of the drawings, reference numeral 10 generally designates an articulator for use in dental technology, in accordance with the invention. The articulator 10 comprises a device 12 having an upstanding post 14 and a lower level bracket or limb 16 fast with and projecting laterally from the bottom of the post 14.

An upper bracket or limb 18 projects laterally from the post 14, at a position spaced above and in alignment in plan view with the lower limb 16. In Figure 1 the limbs 16, 18 are shown horizontal and substantially parallel to each other.

The upper limb 18 is articulated to the top of the post (and thus movable relative to the lower limb) about a horizontal pivot axis defined by the bolt 20 of a nut and bolt arrangement 22 including a nut 24, the upper limb 18 being provided with a set screw 26 having a knurled knob 28, the end of the set screw 26 being arranged to abut against an abutment surface 30 provided at the top of the post 14.

The articulator 10 is intended for use on a table, work bench or the like, the lower end of the post 14 being provided with a pedestal 32 from which the lower limb 16 projects at table or bench level.

At the free end of each of the limbs 16, 18, there is provided a spigot or boss 34. The boss 34 of the limb 16 projects upwardly, and the boss 34 of the limb 18 is provided on what is the underside of the limb 18, when the limb 18 is in its horizontal condition as shown in the drawing, so that the upper boss 34 projects downwardly and so that the bosses 34 are opposed to each other.

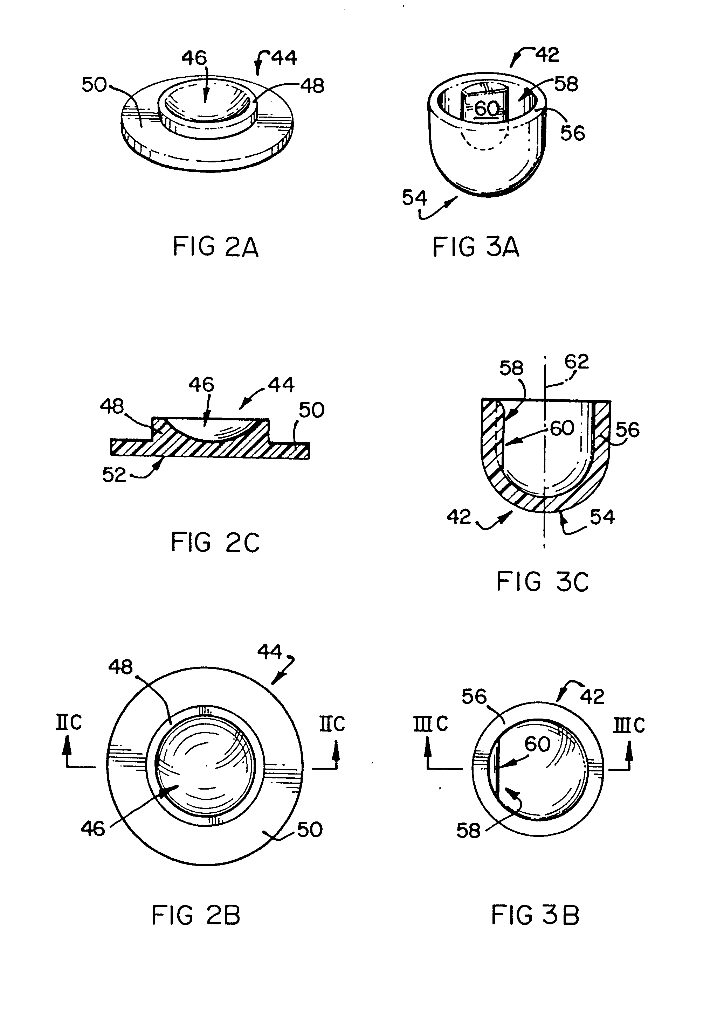

With reference now also to Figures 2 and 3, each of the bosses 34 is shown provided with a jaw cast holder, generally designated 36, attached thereto. Each of these jaw cast holders 36, as described in more detail hereunder, comprises a lockable swivel joint and is detachably attached to its associated boss 34. In Figure 1 of the drawings the holders 36 are shown in their operatively locked conditions, each being attached to a plaster of paris jaw cast, the upper holder 36 being attached to an upper jaw cast designated 38, and the lower holder 36 being shown attached to a lower jaw cast designated 40.

The swivel joints of the holders 36 are ball and socket joints, comprising respectively a bracket- or ball portion 42 and a cast- or socket portion 44.

With particular reference to Figure 2, each socket portion comprises a part spherical recess 46 defined within a rim 48 centrally positioned on and standing proud of one side of a flat disc-like base 50, the opposite side 52 of which base is flat. The recess 46 is less then hemispherical and has a single continuous part-spherical concave surface, the whole of which can be projected to a hemisphere of the same radius of curvature.

With particular reference to Figure 3, the ball portion 42 in turn is of thimble-like shape, the floor 54 of which portion has an outside surface which is part-spherical in shape, having the same radius of curvature as the recess 46 of the socket portion 44 and providing the ball of the ball portion. The ball portion 42 has a circular-cylindrical side wall 56 and a hollow interior for receiving one of the bosses 34 (figure 1). The side wall 56, in the interior of said ball portion 42, has a thickened portion at 58 which presents a radially inwardly directed flat surface 60, so that the ball portion 42 is of non-circular cross-section in a direction normal to its polar axis 62.

In this regard it should be noted that each of the bosses 34 has a corresponding flat portion (not shown) on its outer surface, so that when said boss is received in the ball portion 42, the flat surface on the boss and the flat surface 60 of the ball portion 42 are in abutment, and together act to prevent rotation of the ball portion 42 about the boss, about the polar axis 62. Said boss 34 is receivable in the hollow interior of the ball portion 32 with a hand-tight frictional fit.

In Figures 4 and 5 of the drawings, a modified boss for use with the articulator of Figure 1 is shown and, unless otherwise specified, like reference numerals refer to like parts. Figure 4 shows the end of the upper limb, designated 18.1. It will be appreciated that the construction of the lower limb 16 at its free end will be identical. The boss is generally designated 34.1.

The end of the limb 18.1 is bifurcated, having a central slot 64. The boss itself is of hollow split-walled construction, having an integral flange 66 fast with the limb 18.1 and at the centre of which flange there is a mouth at 68 into the interior of the boss in register with the slot 64, which interior is provided by a threaded bore 70. A grub screw 72 having a wing-nut type head 74 projects via the slot 64 into the bore 70. At the end of the bore 70 remote from the mouth 68 the bore tapers and a metal ball 76 is located in the bore 70 and held captive there by the screw 72. The boss 34.1 is divided into four segments 78 by four longitudinal slits 80. Three of the segments 78 have outer curved surfaces which are part circular in cross-sectional profile, the fourth, designated 78.1 (Figure 5), having a flattened outer surface to give the boss 34.1 a non-circular cross-sectional outer profile.

In use, plaster casts such as the plaster casts 38, 40 shown in Figure 1 of the drawings respectively of an upper and lower jaw, will be manufactured by a dental technician in the usual way, but with the upper surface of the upper cast 38 and the lower surface of the lower cast 40 being made flat or having a flat portion thereon. In a typical procedure to set up the casts 38, 40 on the articulator 12, a socket portion 44 of a ball and socket joint 36 will be adhesively secured by quick-setting adhesive at a suitable position on the flat lower surface of the lower jaw cast 40. The corresponding ball portion 42 will be pressed on to the boss 34 of the lower limb 16 of the articulator 12, and the lower jaw cast 40 will be manipulated about the ball and socket joint 36, constituted by the portions 42, 44, until it is at a desired orientation. Said adhesive will then be used to lock the ball and socket joint 36, by adhesively locking the ball portion 42 to the socket portion 44.

As regards the upper jaw cast 38, a ball portion 42 of a ball and socket joint 36 will be pressed onto the boss 34 of the upper limb 18 of the device 12. The set screw 26 will be manipulated until the upper limb 18 is in a desired position relative to the post 14, with the jaw portions 38, 40 in suitable relative locations to provide the appropriate bite. Simultaneously, with the ball portion 42 of the upper ball and socket joint in sliding engagement with the recess 46 of the socket portion 44, and with said socket portion 44 in contact with the flat upper surface of the upper jaw cast 38, said jaw cast 38 will be manipulated until the jaw casts 38, 40 present substantially exactly the desired bite. The socket portion 44 of the upper joint 36 is then adhesively secured to the upper jaw cast 38, while the upper joint 36 is locked by adhesively securing its ball portion 42 to its socket portion 44.

When a quick-setting adhesive has been used, the jaw portions 38, 40, together with the attached locked ball and socket joints 36 can immediately be removed from the device 12. This provides the immediate advantage that the device 12 is freed for further similar use in setting up another bite for a different set of jaw casts. A further advantage of the invention is that the jaw casts 38, 40 can be re-mounted on the same device 12, or on a substantially identical device, whereafter the substantially exact bite can easily thereafter be obtained by simple manipulation of the set screw 26. A further important advantage of the invention is that it is a relatively simple matter to provide the jaw casts 38, 40 with the appropriate flat surfaces for securing to the socket portions 44 of the joints 36, and once this has been done, setting up the bite can be achieved in a matter of several minutes or less.

The jaw casts can then, for example, be sent from the dental technician to a dentist, and can be set up by the dentist on an identical device 12 to obtain the substantially identical bite with little or no effort, and can be returned thereafter to the dental technician for further work on the jaw casts, after having been set up on the original machine on which the bite was set up, or a similar machine. Furthermore, the jaw casts can be kept in storage for an indeterminate period, with the device 12 freed for other possibly similar work. After such storage the jaw casts can again be set up on the device 12 easily and accurately to obtain the original bite. During such storage, apart from the jaw casts, only the ball and socket joints are being stored, and as these are inexpensive disposable items, the costs associated therewith are low. In this regard, although in principle a variety of materials for moulding the ball and socket joints can be used, it is noted that the Applicant has successfully used the plastics material "LURAN" available from BASF South Africa (Proprietary) Limited, Johannesburg.

With particular reference to the boss 34.1 of Figures 4 and 5, enhanced positive locking is provided for engagement with ball portions 42 of the joints 36. The boss 34.1 is of metal construction and the segments 78 have a degree of resilient flexibility. With the segments unstressed and the screw 72 screwed outwardly in the bore 70 and out of tight contact with the ball 76, a ball portion 42 is an easy sliding fit over the boss 34.1, with the flat surface 60 of the ball portion in contact with the flattened outer surface of the segment 78.1 of the boss 34.1, to prevent rotation of the ball portion around the boss 34.1. If the screw 72 is then screwed hard inwardly, the ball 76 is forced into the tapered end of the bore 70, to urge the segments 78 radially outwardly. This locks the ball portion 42 in position on the boss 34.1. To release the ball portion after use, the screw 72 is unscrewed and the ball 76 is allowed to move out from the tapered end of the bore 70, to allow the segments 78 to flex resiliently inwardly, thereby releasing the ball portion 42 for removal. When this construction is used for both limbs of the articulator, the articulator will have its lower limb 16 spaced sufficiently above the lower surface of the pedestal 32 (see Figure 1), to provide the necessary clearance for the head 34 of the grub screw 72 under said limb 16, so that the lower end of this grub screw, under the limb 16, is at the same level as the lower surface of the pedestal 32, and can help to support the articulator 10 upright.

- C L A I M S -

1.      A dental articulator (10) for use in dental technology. characterised in that it comprises

a pair of brackets (16, 18) for supporting jaw casts (38, 40) in opposed relationship, the brackets being connected together and movable relative to each other to permit alignment relative to each other of jaw casts supported thereby; and

a pair of disposable jaw cast holders (36) detachably attached respectively to the brackets for mounting said jaw casts on the brackets, at least one of the holders comprising a swivel joint (36) about which a jaw cast mounted on said holder can be manipulated.

2.      An articulator as claimed in claim 1, characterised in that the holders are substantially identical and are interchangeably attached to the brackets, each holder comprising a pair of portions (42, 44) engageable with each other via a pair of complementary part-spherical abutment surfaces (46, 54), namely a concave surface (46) and a convex surface (54).

3.      An articulator as claimed in claim 2, characterised in that one portion (44) of each holder is a cast portion having a flat surface (52) facing away from its part-spherical surface (46) for adhesive attachment to a jaw cast, and the other portion (42) is a bracket portion having attachment means (56) for spigot/socket attachment to the associated bracket.

4.      An articulator as claimed in claim 3, characterised in that each cast portion (44) has the concave part-spherical abutment surface (46) and each bracket portion (42) has the convex part-spherical abutment surface (54), each bracket portion having its attachment means in the form of a socket (56) which receives and frictionally engages a spigot (34, 34.1) on the associated bracket (16, 18).

5. An articulator as claimed in claim 4, characterised in that the interior of the socket (56) of each bracket portion is non-circular in cross-sectional outline, the spigot (34, 34.1) on the associated bracket having a complementary non-circular cross-section to prevent rotation of the bracket portion around the spigot.

6. An articulator as claimed in any one of claims 2 to 5 inclusive, characterised in that each concave abutment surface is capable of projection on to a single hemisphere having the same radius of curvature.

7. An articulator as claimed in any one of the preceding claims, characterised in that each portion (42, 44) of each jaw cast holder (36) is in the form of a moulding of synthetic plastics material.

8. An articulator as claimed in any one of the preceeding claims, characterised in that the brackets are respectively provided by a pair of limbs (16, 18) projecting laterally from an upstanding post (14) namely a lower limb (16) projecting at a low level from the post and an upper limb (18) spaced above the lower limb and in alignment therewith in plan view, the upper limb being articulated to the post about a horizontal pivot axis (20) extending transversely to said post and transversely to said upper limb.

9. An accessory (36) for a dental articulator (20) characterised in that it comprises a pair of portions (42, 44) engageable with each other via a pair of complementary part-spherical abutment surfaces (46, 54) providing a swivel joint, namely a concave surface (46) and a convex surface (54), one of the portions (44) being a cast portion and having a flat surface (52) facing away from its part-spherical surface (46) for adhesive attachment to a jaw cast (38, 40), and the other portion(42) being a bracket portion having attachment means (56) for spigot/socket attachment to a bracket (16, 18) on an articulator (10), the concave abutment surface (46) being capable of projection on to a single hemisphere having the same radius of curvature.

10.    An accessory as claimed in claim 9, characterised in that each of the portions is in the from of a moulding(42, 44) of synthetic plastics material, the cast portion (44) having the concave part-spherical abutment surface (46) and the bracket portion (42) having the convex part-spherical abutment surface (54), the bracket portion having its attachment means in the form of a socket (56) for frictionally engaging a spigot (34, 34.1) on a bracket on an articulator, the interior of the socket being non-circular in cross-sectional outline.

0211788

FIG 1

FIG 4

FIG 5

FIG 2A

FIG 3A

FIG 2C

FIG 3C

FIG 2B

FIG 3B

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 922 153 (G. NATT) <br> * Figure 1 * | 1,2,9 | A 61 C 11/00 |
| A | | 3,4,10 | |
| A | GB-A-2 014 683 (P.W. LAMBERT) <br> * Figure 12 * | 3,4 | |
| A | US-A-2 608 762 (M.R. FOX) <br><br> * Figure 1 * | 1-4,8, 9 | |
| A | US-A-4 504 226 (W.W. GORDON) <br> * Figures 1-4 * | 8 | |

-----

| | |
|---|---|
| | **TECHNICAL FIELDS SEARCHED (Int. Cl.4)** |
| | A 61 C |

The present search report has been drawn up for all claims

| Place of search | Date of completion of the search | Examiner |
|---|---|---|
| THE HAGUE | 25-11-1986 | RAKOWICZ,J.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO Form 1503 03 82